# EUROPEAN PATENT APPLICATION

(11) **EP 4 610 822 A1**
(43) Date of publication of application: **03.09.2025**
(21) Application number: 24810013.3
(22) Date of filing: 07.03.2024
(51) Int. Cl.: G06F 9/451

(54) **INTERFACE DISPLAY METHOD AND RELATED APPARATUS**

(30) Priority: 23.05.2023 CN 202310589820
(71) Applicant: Honor Device Co., Ltd., Shenzhen, Guangdong 518040 (CN)
(72) Inventor: MA, Shengbo, Shenzhen, Guangdong 518040 (CN); ZHOU, Xiangchun, Shenzhen, Guangdong 518040 (CN)
(74) Representative: MERH-IP Matias Erny Reichl Hoffmann Patentanwälte PartG mbB
(86) International application number: PCT/CN2024/080649
(87) International publication number: WO 2024/239764

(57) **Abstract**

An interface display method and a related apparatus that are provided in embodiments of this application relate to the field of terminal technologies. The method includes: displaying a first blurred object in a target application at a first moment, where the first blurred object is obtained after first blurred background is added to the target object, the first blurred object is located at a first location, the first blurred background includes blurred background obtained after blurring processing is performed on content of a first area in an interface of the target application, and the first area includes the first location; and displaying a second blurred object in the target application at a second moment, where the second blurred object is obtained after second blurred background is added to the target object, the second blurred object is located at a second location, the second blurred background includes blurred background obtained after blurring processing is performed on content of a second area in the interface of the target application, and the second area includes the second location. In this way, the blurred background in the application can dynamically change as content in an application interface changes, so that user experience is improved.

## Description

This application claims priority to Chinese Patent Application No. 202310589820.8, filed with the China National Intellectual Property Administration on May 23, 2023 and entitled "INTERFACE DISPLAY METHOD AND RELATED APPARATUS", which is incorporated herein by reference in its entirety.

### TECHNICAL FIELD

This application relates to the field of terminal technologies, and in particular, to an interface display method and a related apparatus.

### BACKGROUND

Currently, an electronic device may implement a background blurring function in an interface. Background blurring may increase sense of quality of a display interface, and highlight an aesthetic design of the interface.

In some implementations, when background of a specific area of an application needs to be blurred, the application may provide a blurred image in advance as a blurred background image of the area. However, the foregoing implementation of background blurring results in relatively monotonous blurred background display for the area, and user experience is relatively poor.

### SUMMARY

Based on an interface display method and a related apparatus that are provided in embodiments of this application, in a same application, an electronic device may take a snapshot of content in an application interface, and perform blurring processing on the snapshot to obtain a blurred snapshot. Therefore, the electronic device can render the blurred snapshot onto a layer corresponding to the application, to present an effect of blurred background in the application interface.

According to a first aspect, an embodiment of this application provides an interface display method, and the method includes:
displaying a first blurred object in a target application at a first moment, where the first blurred object is obtained after first blurred background is added to the target object, the first blurred object is located at a first location, the first blurred background includes blurred background obtained after blurring processing is performed on content of a first area in an interface of the target application, and the first area includes the first location; and displaying a second blurred object in the target application at a second moment, where the second blurred object is obtained after second blurred background is added to the target object, the second blurred object is located at a second location, the second blurred background includes blurred background obtained after blurring processing is performed on content of a second area in the interface of the target application, the second area includes the second location, the content of the first area in the interface of the target application is different from the content of the second area in the interface of the target application, and the second moment is later than the first moment. In this way, an electronic device may enable the blurred background in the application to dynamically change as content in an application interface changes, so that an effect of dynamic background blurring is presented in the application interface, and user experience is improved.

In a possible implementation, before the second blurred object is displayed in the target application, the method may further include: receiving a triggering operation performed by a user on the target object; and moving the target object to the second location in response to the triggering operation. In this way, in an application scenario of a leftmost home screen, as the target object moves, blurred background corresponding to the target object may also dynamically change, so that aesthetic appeal of the application interface can be increased, and user experience can be improved.

In a possible implementation, in the interface of the target application, a location of the target object remains unchanged, and before the second blurred object is displayed in the target application, the method may further include: receiving a triggering operation performed by a user on an area other than the second area in the interface of the target application; and making, in response to the triggering operation, content in the interface of the target application change. In this way, in an application scenario of Albums, when content in an application interface changes, blurred background corresponding to the target object may also dynamically change, so that display of the application interface is relatively rich, and user experience is improved.

In a possible implementation, a blurring parameter is set by the target application, and the blurring parameter includes one or more of the following parameters: a blurring radius, a color value, saturation, a quantity of interval frames, a blurring algorithm, and a blurring mode. When the blurring parameter includes the blurring radius, a smaller blurring radius leads to a lighter blurring degree of the first area, and a larger blurring radius leads to a heavier blurring degree of the first area. The quantity of interval frames is used to indicate a cycle for calculating blurred background. The blurring mode includes a first mode and a second mode, and if the blurring mode is the first mode, the first blurred object is obtained after the first blurred background is drawn in the first area, or if the blurring mode is the second mode, the first blurred object is obtained after fill-in processing is performed on the target object by using the first blurred background. In this way, there may be different display effects in the application interface, so that display of the blurred object in the application interface is enriched.

In a possible implementation, before the displaying a first blurred object in a target application, the method may further include: The target application transfers, in a first thread, the blurring parameter to a view control at an application layer; the view control transfers, in the first thread, the blurring parameter to a drawing node in a Native library, where the blurring parameter is in a to-be-synchronized state; and if the blurring radius in the blurring parameter is greater than zero, a skia graphics library in the Native library generates, in the first thread, a blurring filter based on the blurring radius, or otherwise, determines that the blurring filter is none. In this way, an application parameter is transferred in a main thread, so that another thread does not need to be re-started, thereby reducing overheads of starting a thread and improving running efficiency of the electronic device.

In a possible implementation, before the displaying a first blurred object in a target application, the method may further include: synchronizing the blurring parameter and the blurring filter in a property of the drawing node based on a second thread; if the blurring filter is not none, obtaining a snapshot of a canvas of the target application in the second thread; determining an unblurred background image in the second thread, where the unblurred background image is content that is in the snapshot of the canvas and that is located in the first area; and mixing, by the skia graphics library and in the second thread, the unblurred background image and the blurring filter, to obtain the first blurred background. In this way, blurred background in the application can dynamically change as the content in the application interface changes, thereby enriching a display effect of background blurring in the interface of the electronic device.

In a possible implementation, the synchronizing the blurring parameter and the blurring filter in a property of the drawing node based on a second thread may include: The skia graphics library calls, in the second thread, a syncProperties() function to synchronize the blurring parameter and the blurring filter in the property of the drawing node. In this way, the blurring parameter and the blurring filter that are in the to-be-synchronized state may be synchronized to the property of the drawing node, to get ready for further background blurring.

In a possible implementation, the obtaining a snapshot of a canvas of the target application from the second thread may include: The skia graphics library obtains, in the second thread, the snapshot of the canvas of the target application based on the property of the drawing node. In this way, the snapshot of the canvas is dynamically obtained, so that the blurred background dynamically changes as the content in the application interface changes.

In a possible implementation, after the first blurred background is obtained, the method may include: buffering the first blurred background; and displaying a third blurred object in the target application at a third moment, where the third blurred object is obtained after the first blurred background in a cache is added to the target object, and the third moment is later than the first moment. In this way, the electronic device can save a procedure of taking the snapshot of the canvas, and can also save a procedure of calculating location information of the drawing node, thereby saving computing power and reducing power consumption of the electronic device.

In a possible implementation, the first blurred background, the blurring parameter, and a layout of the drawing node each remain unchanged from the first moment to the third moment. In this way, the electronic device may not need to take a snapshot of each frame of canvas, so that an execution procedure of blurring processing can be saved, thereby saving computing power.

In a possible implementation, the quantity N of interval frames is a positive integer greater than or equal to 1, and after the first blurred background is obtained, the method may include: buffering the first blurred background; and displaying a fourth blurred object in the target application at a fourth moment, where an interval between the fourth blurred object and the first blurred object is less than or equal to N frames, the fourth blurred object is obtained after the first blurred background in a cache is added to the target object, and the fourth moment is later than the first moment. In this way, the electronic device can save a procedure of taking the snapshot of the canvas and calculating the location information of the drawing node, thereby saving computing power and reducing power consumption of the electronic device.

In a possible implementation, the second thread runs in a graphics processing unit GPU. In this way, a CPU completes drawing of a blurred background image, so that time of rendering an interface can be shortened, and performance of the CPU is not affected.

According to a second aspect, an embodiment of this application provides an interface display apparatus. The apparatus may be an electronic device, or may be a chip or a chip system in the electronic device. The apparatus may include a processing unit and a display unit. The processing unit is configured to implement any processing-related method performed by the electronic device in the first aspect or any possible implementation of the first aspect. The display unit is configured to implement any display-related method performed by the electronic device in the first aspect or any possible implementation of the first aspect. When the apparatus is the electronic device, the processing unit may be a processor. The apparatus may further include a storage unit, and the storage unit may be a storage. The storage unit is configured to store instructions, and the processing unit executes the instructions stored in the storage unit, so that the electronic device is enabled to implement the method described in the first aspect or any possible implementation of the first aspect. When the apparatus is the chip or the chip system in the electronic device, the processing unit may be a processor. The processing unit executes the instructions stored in the storage unit, so that the electronic device is enabled to implement the method described in the first aspect or any possible implementation of the first aspect. The storage unit may be a storage unit (for example, a register or a cache) in the chip or a storage unit (for example, a read-only memory or a random access memory) that is in the electronic device and that is located outside the chip.

For example, the display unit is configured to display a first blurred object in a target application, and is further configured to display a second blurred object in the target application; and the processing unit is configured to perform blurring processing on content of a first area in an interface of the target application, and is further configured to perform blurring processing on content of a second area in the interface of the target application.

In a possible implementation, the processing unit is configured to receive a triggering operation performed by a user on the target object, and is further configured to move the target object to a second location in response to the triggering operation.

In a possible implementation, the processing unit is configured to receive a triggering operation performed by a user on an area other than the second area in the interface of the target application, and is further configured to make, in response to the triggering operation, content in the interface of the target application change.

In a possible implementation, a blurring parameter is set by the target application, and the blurring parameter includes one or more of the following parameters: a blurring radius, a color value, saturation, a quantity of interval frames, a blurring algorithm, and a blurring mode.

In a possible implementation, the processing unit is configured to transfer the blurring parameter to a view control at an application layer, and is further configured to transfer the blurring parameter to a drawing node in a Native library, and is further specifically configured to generate a blurring filter based on the blurring radius.

In a possible implementation, the processing unit is configured to synchronize the blurring parameter and the blurring filter in a property of the drawing node, is further configured to obtain a snapshot of a canvas of the target application, is further specifically configured to determine an unblurred background image, and is further configured to mix the unblurred background image and the blurring filter.

In a possible implementation, the processing unit is configured to call a syncProperties() function to synchronize the blurring parameter and the blurring filter in the property of the drawing node.

In a possible implementation, the processing unit is configured to obtain the snapshot of the canvas of the target application from a second thread based on the property of the drawing node.

In a possible implementation, the processing unit is configured to buffer first blurred background, and is further configured to add the first blurred background in a cache to the target object, and the display unit is configured to display a third blurred object in the target application.

In a possible implementation, the first blurred background, the blurring parameter, and a layout of the drawing node each remain unchanged from a first moment to a third moment.

In a possible implementation, the processing unit is configured to buffer first blurred background, and is further configured to add the first blurred background in a cache to the target object, and the display unit is configured to display a fourth blurred object in the target application.

In a possible implementation, the second thread runs in a graphics processing unit GPU.

According to a third aspect, an embodiment of this application provides a terminal device, including a processor and a storage. The storage is configured to store code instructions, and the processor is configured to run the code instructions to perform the method described in the first aspect or any possible implementation of the first aspect.

According to a fourth aspect, an embodiment of this application provides a computer-readable storage medium. The computer-readable storage medium stores a computer program or instructions. When the computer program or the instructions are run on a computer, the computer is enabled to perform the method described in the first aspect or any possible implementation of the first aspect.

According to a fifth aspect, an embodiment of this application provides a computer program product including a computer program. When the computer program is run on a computer, the computer is enabled to perform the method described in the first aspect or any possible implementation of the first aspect.

According to a sixth aspect, this application provides a chip or a chip system. The chip or the chip system includes at least one processor and a communication interface. The communication interface and the at least one processor are interconnected through a line. The at least one processor is configured to run a computer program or instructions to perform the method described in the first aspect or any possible implementation of the first aspect. The communication interface in the chip may be an input/output interface, a pin, a circuit, or the like.

In a possible implementation, the chip or the chip system described above in this application further includes at least one storage, and the at least one storage stores instructions. The storage may be a storage unit, for example, a register or a cache, inside the chip, or may be a storage unit (for example, a read-only memory or a random access memory) of the chip.

It should be understood that technical solutions of the second aspect to the sixth aspect of this application correspond to those of the first aspect of this application, and beneficial effects achieved in these aspects and corresponding feasible implementations are similar to those of the first aspect. Details are not described again.

### BRIEF DESCRIPTION OF DRAWINGS

FIG. 1 is a schematic diagram of an interface of a setting application according to an embodiment of this application;
FIG. 2 is a schematic diagram of an interface display method according to an embodiment of this application;
FIG. 3 is a schematic diagram of a structure of an electronic device according to an embodiment of this application;
FIG. 4 is a schematic diagram of a software structure of an electronic device according to an embodiment of this application;
FIG. 5 is a schematic diagram of interaction between modules in an interface display process according to an embodiment of this application;
FIG. 6 is a schematic diagram of transferring a parameter to a Native library by an application according to an embodiment of this application;
FIG. 7 is a schematic diagram of interface display of a leftmost home screen application according to an embodiment of this application;
FIG. 8A and FIG. 8B are schematic diagrams of interface display of another leftmost home screen application according to an embodiment of this application;
FIG. 9A and FIG. 9B are schematic diagrams of interface display of an album application according to an embodiment of this application;
FIG. 10 is a schematic flowchart of implementing background blurring according to an embodiment of this application;
FIG. 11 is a schematic diagram of interface display of a fill-in blurring mode according to an embodiment of this application;
FIG. 12 is a schematic diagram of a specific interface display method according to an embodiment of this application; and
FIG. 13 is a schematic diagram of a structure of a chip according to an embodiment of this application.

### DESCRIPTION OF EMBODIMENTS

To clearly describe the technical solutions in embodiments of this application, the following briefly describes some terms and technologies in the embodiments of this application.

### 1. Terms

In the embodiments of this application, words such as "first" and "second" are used to distinguish between same items or similar items with basically same functions and effects. For example, a first chip and a second chip are merely used to distinguish between different chips, and are not intended to limit a sequence of the first chip and the second chip. A person skilled in the art may understand that the words such as "first" and "second" do not limit a quantity or an execution sequence, and the words such as "first" and "second" do not define a definite difference.

It should be noted that the words such as "example" or "for example" in the embodiments of this application are used to indicate an example, an illustration, or a description. Any embodiment or design solution described as an "example" or "for example" in this application should not be construed as being preferred or advantageous over other embodiments or design solutions. Exactly, use of the word such as "example" or "for example" is intended to present related concepts in a specific manner.

In the embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between associated objects. "At least one of the following items" or a similar expression thereof means any combination of these items, including a single item or any combination of a plurality of items. For example, at least one of a, b, or c may represent a, b, c, a-b, a-c, b-c, or a-b-c, where a, b, and c may be singular or plural.

Currently, an electronic device may implement a background blurring function in an interface. Background blurring may increase sense of quality of a display interface, and highlight an aesthetic design of the interface.

In some implementations, the electronic device may implement background blurring processing across layers among different applications. It may be understood that, in the embodiments of this application, each application may correspond to one layer, and different applications may have respective corresponding layers. The layer may also be referred to as a canvas. In this case, background blurring processing across layers may be understood as that the electronic device performs background blurring processing on a plurality of layers.

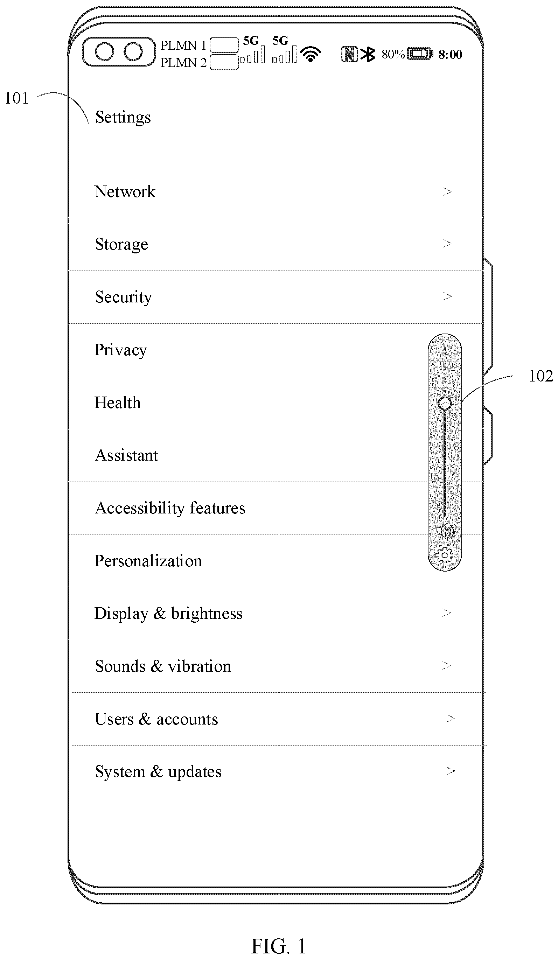

As shown in FIG. 1, a Settings application interface 101 and a volume application interface 102 are displayed on an electronic device. When drawing the volume application interface 102, the electronic device may use a layer corresponding to the Settings application interface 101 as background, and perform blurring processing in some areas of the background, so that background of the volume application interface 102 presents a blurred effect.

The electronic device may further implement background blurring processing on an interface of an application. In some implementations, when background of an area of the application needs to be blurred, the application may provide a blurred image in advance as a blurred background image of the area, and therefore, the electronic device may render the blurred background image onto a layer corresponding to the application, so that the background of the area presents a blurred effect.

However, when the electronic device performs background blurring by using the blurred background image, because the blurred background image is preset, blurred background of the area cannot change as content in the application interface changes. Consequently, display of the blurred background of the area is relatively monotonous, and user experience is relatively poor.

In view of this, according to an interface display method provided in embodiments of this application, in a same application, an electronic device may take a snapshot of content in an application interface, and perform blurring processing on the snapshot to obtain a blurred snapshot. Therefore, the electronic device can render the blurred snapshot onto a layer corresponding to the application, to present an effect of blurred background in the application interface. In this way, blurred background in the application may dynamically change as content in the application interface changes, thereby improving user experience.

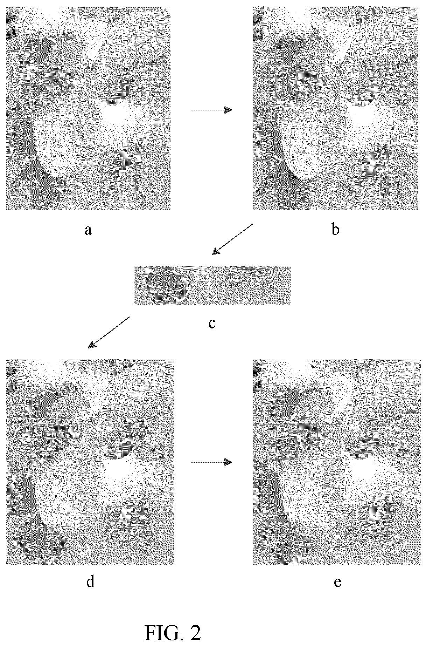

For example, as shown in FIG. 2, a in FIG. 2 is an unprocessed image in an application. When the application is to blur background of an area 201 in which three icons at lower locations in a in FIG. 2 are located, before the three icons are rendered at a layer corresponding to the application, the electronic device may first take a snapshot of the current layer to obtain a snapshot shown in b in FIG. 2. It may be understood that, because the three icons are not rendered on the current layer, the snapshot in b in FIG. 2 does not include the three icons.

Further, the electronic device may calculate, in the snapshot corresponding to b in FIG. 2, a location of the area 201 in which the three icons are located, and perform, in the snapshot in b in FIG. 2, blurring processing on the area 201 in which the three icons are located, to generate an area blurred image corresponding to the area 201 in which the three icons are located. The area blurred image is shown in c in FIG. 2.

The electronic device may further combine the snapshot in b in FIG. 2 and the area blurred image in c in FIG. 2 to generate a blurred background image shown in d in FIG. 2. Further, the electronic device may render the three icons on the blurred background image in d in FIG. 2, to obtain an image undergoing blurring processing that is shown in e in FIG. 2.

It may be understood that the electronic device in embodiments of the embodiments of this application may be alternatively any form of terminal device. For example, the electronic device may include a handheld device, an in-vehicle device, or the like with a display function. For example, some electronic devices are a mobile phone (mobile phone), a tablet computer, a palmtop computer, a notebook computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, an onboard device, a wearable device, an electronic device in a 5G network, an electronic device in a future evolved public land mobile network (public land mobile network, PLMN), and the like. This is not limited in the embodiments of this application.

As an example rather than a limitation, in the embodiments of this application, the electronic device may be alternatively a wearable device. The wearable device may also be referred to as a wearable smart device, and is a generic term for wearable devices such as glasses, gloves, watches, clothing, and shoes that are intelligently designed and developed from daily wears by using wearable technologies. The wearable device is a portable device that is worn directly on a body or integrated into clothing or an accessory of a user. The wearable device is not merely a hardware device, but implements powerful functions through software support, data interaction, and cloud interaction. In a broad sense, the wearable smart device includes a full-featured and large-size device that can implement all or some functions without relying on a smartphone, for example, a smartwatch or smart glasses, and a device that focuses only on a specific type of application function and needs to be used together with another device such as a smartphone, for example, various types of smart bands and smart jewelry that monitor physical signs.

In addition, in the embodiments of this application, the electronic device may be alternatively an electronic device in an internet of things (internet of things, IoT) system. IoT is an important part in future development of information technologies, and a main technical feature thereof is connecting a thing to a network through a communication technology, to implement an intelligent network of human-machine interconnection and interconnection between things.

The electronic device in the embodiments of this application may also be referred to as user equipment (user equipment, UE), a mobile station (mobile station, MS), a mobile terminal (mobile terminal, MT), an access terminal, a subscriber unit, a subscriber station, a mobile station, a mobile console, a remote station, a remote terminal, a mobile device, a user terminal, a terminal, a wireless communication device, a user agent, a user apparatus, or the like.

In the embodiments of this application, the electronic device or each network device includes a hardware layer, an operating system layer that runs above the hardware layer, and an application layer that runs above the operating system layer. The hardware layer includes hardware such as a central processing unit (central processing unit, CPU), a memory management unit (memory management unit, MMU), and a memory (also referred to as a main memory). The operating system may be any one or more computer operating systems implementing service processing through a process (process), for example, a Linux operating system, a Unix operating system, an Android operating system, an iOS operating system, or a windows operating system. The application layer includes applications such as Browser, Contacts, word processing software, and instant messaging software.

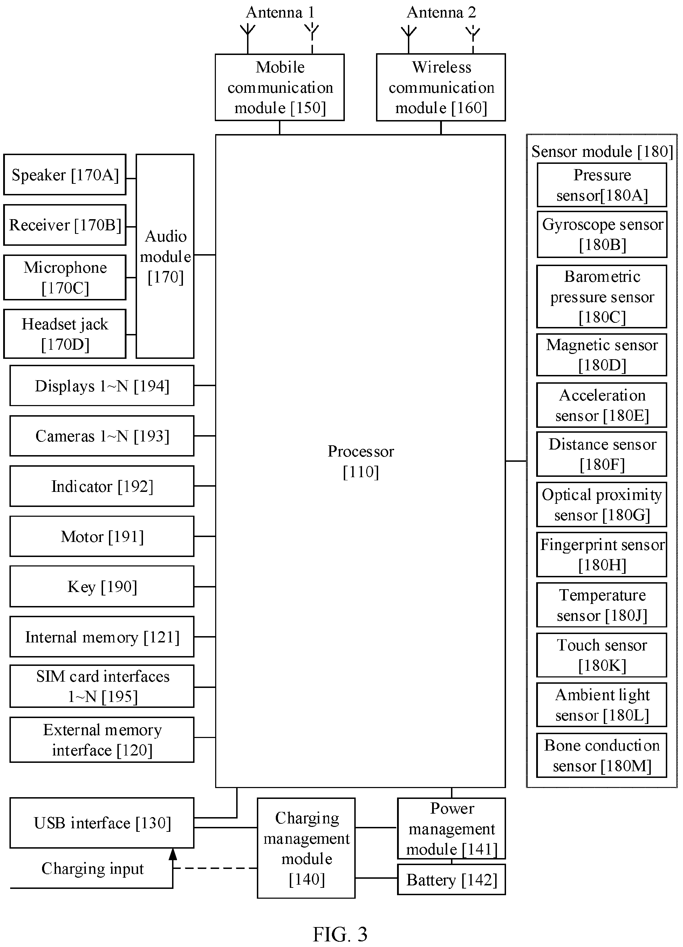

For example, FIG. 3 is a schematic diagram of a structure of an electronic device.

The electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device. In some other embodiments of this application, the electronic device may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

A storage may be further disposed in the processor 110 to store instructions and data. In some embodiments, the storage in the processor 110 is a cache memory. The storage may store instructions or data recently used or cyclically used by the processor 110. If the processor 110 needs to use the instructions or the data again, the processor 110 may directly call the instructions or the data from the storage. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, a USB interface, and/or the like.

It may be understood that an interface connection relationship between the modules illustrated in this embodiment of the present invention is merely an example for description, and does not constitute a limitation on the structure of the electronic device. In some other embodiments of this application, the electronic device may alternatively use an interface connection manner different from that in the foregoing embodiment, or use a combination of a plurality of interface connection manners.

The internal memory 121 may be configured to store computer-executable program code, and the executable program code includes instructions. The internal memory 121 may include a program storage area and a data storage area. The program storage area may store an operating system, an application required by at least one function (for example, a sound playing function or an image playing function), and the like. The data storage area may store data (for example, audio data and a phone book) and the like created during use of the electronic device. In addition, the internal memory 121 may include a high-speed random access memory, and may further include a nonvolatile memory, for example, at least one magnetic disk storage device, a flash memory device, or a universal flash storage (universal flash storage, UFS). The processor 110 performs various function applications and data processing of the electronic device by running the instructions stored in the internal memory 121 and/or the instructions stored in the memory disposed in the processor. For example, the method in the embodiments of this application may be performed.

The display 194 is configured to display an image, a video, and the like. The display 194 includes a display panel. In some embodiments, the electronic device may include one or N displays 194, where N is a positive integer greater than 1. The electronic device implements a display function by using the GPU, the display 194, the application processor, and the like. The GPU is a microprocessor for image processing, and is connected to the display 194 and the application processor.

The electronic device implements a display function by using the GPU, the display 194, the application processor, and the like. The GPU is a microprocessor for image processing, and is connected to the display 194 and the application processor. The GPU is configured to perform mathematical and geometric computing for graphics rendering. For example, in this embodiment of this application, the GPU may be configured to draw a blurred background image. The processor 110 may include one or more GPUs that execute program instructions to generate or change display information. The electronic device may implement a shooting function by using the ISP, the camera 193, the video codec, the GPU, the display 194, the application processor, and the like.

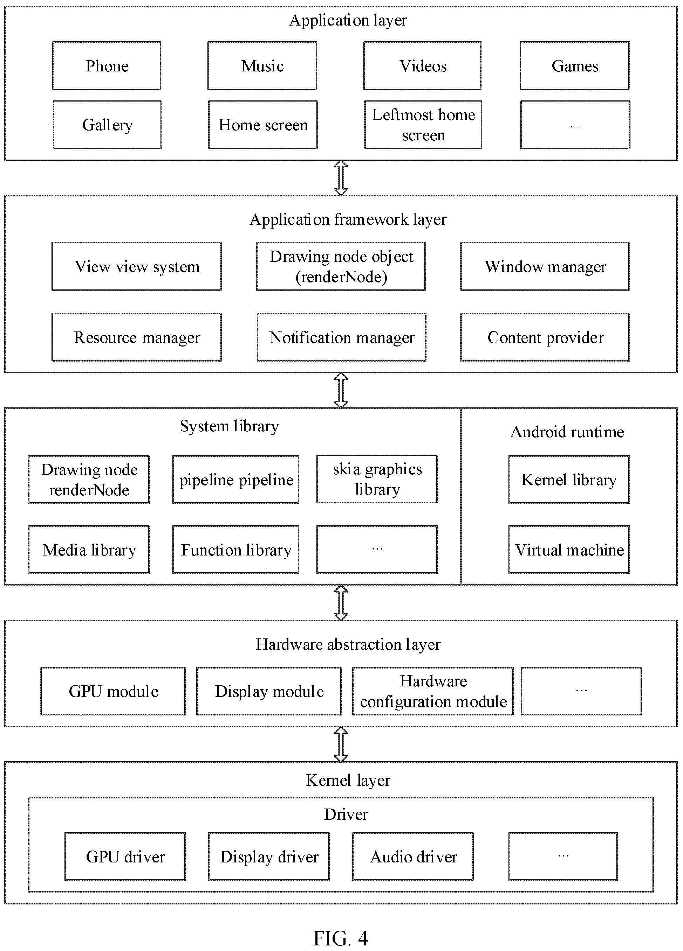

FIG. 4 is a diagram of a software structure of an electronic device according to an embodiment of this application. In a layered architecture, software is divided into several layers, and each layer has a clear role and task. The layers communicate with each other through software interfaces. In some embodiments, an Android system is divided into five layers: an application layer, an application framework layer, an Android runtime (Android runtime) and a system library, a hardware abstraction layer, and a kernel layer from top to bottom.

The application layer may include a series of application packages. As shown in FIG. 4, the application package may include applications such as Phone, Music, Videos, Games, Gallery, Home screen, and Leftmost home screen. The applications may include a system application and a third-party application.

The application framework layer provides an application programming interface (application programming interface, API) and a programming framework for an application at the application layer. The application framework layer includes some predefined functions.

As shown in FIG. 4, the application framework layer may also be referred to as a framework layer, and the framework layer may include a view system, a drawing node object (renderNode), a window manager, a resource manager, a notification manager, a content provider, and the like.

The view system may be responsible for interface drawing and event processing of the application. An interface layout of an application in the electronic device may be implemented by invoking a View control in the view system. For example, in this embodiment of this application, the view system may provide a background blurring capability interface for the application, so that the application is allowed to set a blurring parameter.

The drawing node object may be understood as an interface provided by a drawing node in a Native library for upper layer interaction, and the drawing node object may draw an application interface together with the view system.

The window manager is configured to manage a window program. The window manager may obtain a size of a display, and determine whether a status bar exists, lock a screen, touch a screen, drag a screen, take a screenshot, and the like.

The resource manager provides various resources for the application, for example, a localized string, an icon, an image, a layout file, and a video file.

The notification manager enables the application to display notification information in a status bar, and may be configured to convey a notification-type message that may automatically disappear after a short stay without requiring user interaction.

The content provider is configured to implement a data sharing function between different applications, to allow one program to access data in another program, and ensure security of the accessed data.

The Android runtime includes a kernel library and a virtual machine. The Android runtime is responsible for scheduling and management of an Android system.

The kernel library includes two parts: One part is a functional function that needs to be called in a java language, and the other part is a kernel library of Android.

The application layer and the application framework layer run on the virtual machine. The virtual machine executes java files at the application layer and the application framework layer as binary files. The virtual machine is configured to perform functions such as object lifecycle management, stack management, thread management, security and exception management, and garbage collection. For example, in this embodiment of this application, the virtual machine may be configured to perform functions such as frame image drawing and background blurring processing.

The system library may also be referred to as the Native library, and the Native library may include a plurality of functional modules, for example, a graphics processing library (for example, OpenGL ES), a media library (media libraries), and a function library (function libraries). The Native library may further include a pipeline and a drawing node (RenderNode).

The graphics processing library is configured to implement three-dimensional graphics drawing, image rendering, composition, layer processing, and the like. The graphics processing library may include a skia graphics library, and the skia graphics library may be a graphics library of graphics, images, animations, and text at a bottom layer of the electronic device. When the application draws or renders an image, an API interface provided by the skia graphics library needs to be invoked. This may also be understood as that an application interface is displayed by using a function provided by the skia graphics library in the Native library of the electronic device.

The media library supports playback and recording in a plurality of common audio and video formats, a still image file, and the like. The media library may support a plurality of audio and video encoding formats, for example, MPEG4, H.264, MP3, AAC, AMR, JPG, and PNG.

The function library provides a developer with API interfaces for a plurality of services, to help the developer quickly integrate and implement various functions.

The pipeline may be understood as a rendering pipeline in a process of drawing the application interface, that is, a drawing and rendering process of the application interface is performed in the pipeline. In the pipeline, the electronic device may further invoke capabilities of openGL and openGL ES encapsulated in the skia graphics library, and call a skia graphics library drawing instruction to draw the application interface.

The drawing node (renderNode) may also be referred to as a renderer, and the drawing node may be understood as an underlying rendering mechanism corresponding to interface rendering performed by the electronic device. For example, each interface of the application may have a respective corresponding drawing node. The hardware abstraction layer is an abstracted layer of structure between the kernel layer and the Android runtime. The hardware abstraction layer may be an encapsulation of a hardware driver, and provides a unified interface for invocation of an upper-layer application.

The kernel layer is a layer between hardware and software. The kernel layer may include a GPU driver, a display driver, a camera driver, an audio driver, a battery driver, a Bluetooth driver, a central processing unit driver, a USB driver, and the like.

It should be noted that only the Android system is used as an example for description in this embodiment of this application. In another operating system (for example, a Windows system or an IOS system), the solutions of this application can also be implemented provided that functions implemented by the functional modules are similar to those in this embodiment of this application.

An interaction process between modules is described below with reference to an interface display process of an electronic device.

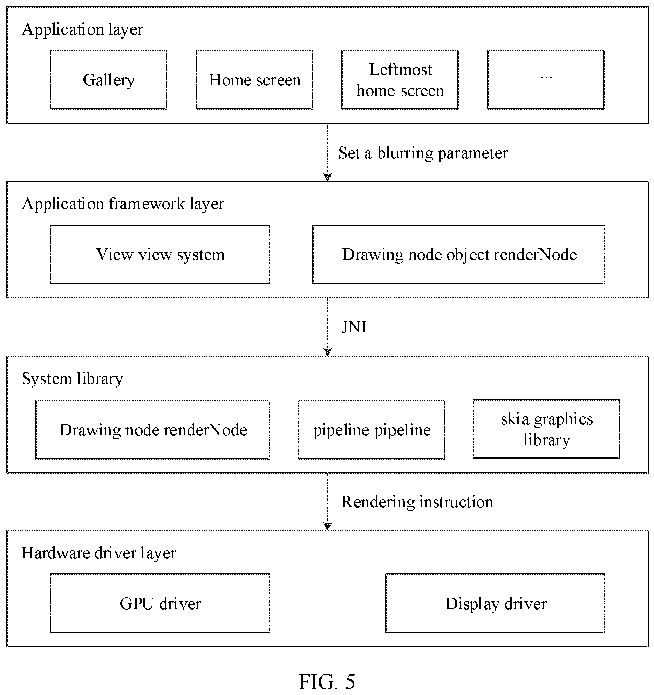

As shown in FIG. 5, an electronic device may draw an interface for an application based on a layout file of the application. At an application layer, when an area of an application interface needs to be displayed with background being blurred, the application may generate a blurring parameter of the area, and transfer the blurring parameter to a background blurring capability interface provided by a view system at a Framework layer of the electronic device. For example, the background blurring capability interface may include a setBlurParameters() function.

The foregoing blurring parameter may include at least one of the following: a blurring radius, a color value, saturation, a quantity of interval frames, a blurring algorithm, a blurring mode, or the like.

The blurring radius may be a parameter for determining a blurring degree of a to-be-blurred area, and the blurring radius includes a horizontal blurring radius blurRadiusX and a vertical blurring radius blurRadiusY. It may be understood that a smaller blurring radius leads to a lighter blurring degree and clearer background, and a larger blurring radius leads to a heavier blurring degree and less clear background.

In a possible implementation, the electronic device may obtain, by using the blurring algorithm, a pixel point with a size of the blurring radius from a surrounding area. A pixel point in the to-be-blurred area is used as an example. The electronic device may use the pixel point as a center, and take a pixel point based on the horizontal blurring radius blurRadiusX and the vertical radius blurRadiusY. For example, the blurring radius blurRadiusX and the blurring radius blurRadiusY each are 1, and this may indicate that the electronic device respectively takes one pixel point in upper, lower, left, and right directions of the pixel point to perform blurring, or may form a rectangular area by extending one pixel in upper, lower, left, and right directions of the pixel point. A specific implementation may be related to a blurring algorithm, and is not limited in this embodiment of this application.

The color value may also be understood as a tone value, and the color value may be used to set brightness of the application interface, to enhance or reduce a brightening effect for the application interface. For example, the color value may be color that covers content in a blurred interface, and is used to adjust a display effect.

The saturation may be used to set a brightness degree of color in the application interface. For example, higher saturation leads to brighter color of the application interface, and lower saturation leads to a closer degree of the color of the application interface to gray.

The quantity of interval frames may be used to indicate a cycle for calculating blurred background.

The blurring algorithm may include an algorithm such as Gaussian blur, kawase blur (kawase blur), or box blur (BoxBlur).

The blurring mode may include an entire blurring mode and a fill-in blurring mode.

In addition, after a layout file of an application is parsed by the view system at the framework layer, View tree information corresponding to the layout file may be generated, and a View tree may represent an interface layout of the application. The View tree information may include information such as a length, a width, and a location of each control in the application interface, and may further include information of an icon, text, and the like in the interface.

At the Framework layer, each View control in the view system may have a corresponding drawing node object renderNode, and the drawing node object renderNode may be configured to interact with a drawing node renderNode in a Native library. After the background blurring capability interface receives the blurring parameter transferred by the application, the drawing node object renderNode may transfer the blurring parameter to the drawing node renderNode in the Native library through a java native interface (java native interface, JNI).

The Native library may include a module for implementing drawing and rendering, for example, a processing procedure of background blurring may be implemented in the Native library. It may be understood that the drawing node renderNode in the Native library may have a corresponding drawing instruction set displaylist, and the drawing instruction set displaylist may be processed in a pipeline.

The electronic device may draw the application interface and perform background blurring processing by using an OpenGL invoking capability of a skia graphics library, and may further convert the drawing instruction set displaylist in the drawing node renderNode into a drawing and rendering instruction that can be called by a GPU driver at a hardware driver layer. A GPU driver completes drawing of a blurred background image, and then displays an interface of the application in the electronic device by using a Display display driver.

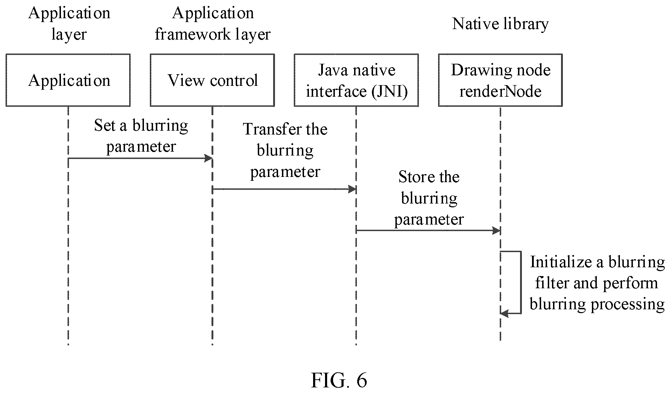

FIG. 6 is a schematic diagram in which an application transfers a parameter to a Native library of an electronic device. It may be understood that a parameter transferring process shown in FIG. 6 may be performed in a main thread of the electronic device.

As shown in FIG. 6, the application may generate a blurring parameter of a to-be-blurred area, and invoke a related capability interface to set the blurring parameter to a view control at a Framework layer. The view control may transfer, through a JNI, the blurring parameter that is set by the application to a drawing node renderNode corresponding to the Native library. The drawing node renderNode may store the blurring parameter. It may be understood that, in this case, the blurring parameter is in a to-be-synchronized state.

A skia graphics library in the Native library may generate a blurring filter. In a possible implementation, when a blurring radius in the blurring parameter is greater than zero, the skia graphics library may generate the blurring filter based on the blurring radius, and when the blurring radius in the blurring parameter is less than or equal to zero, the skia graphics library may set the blurring filter to none.

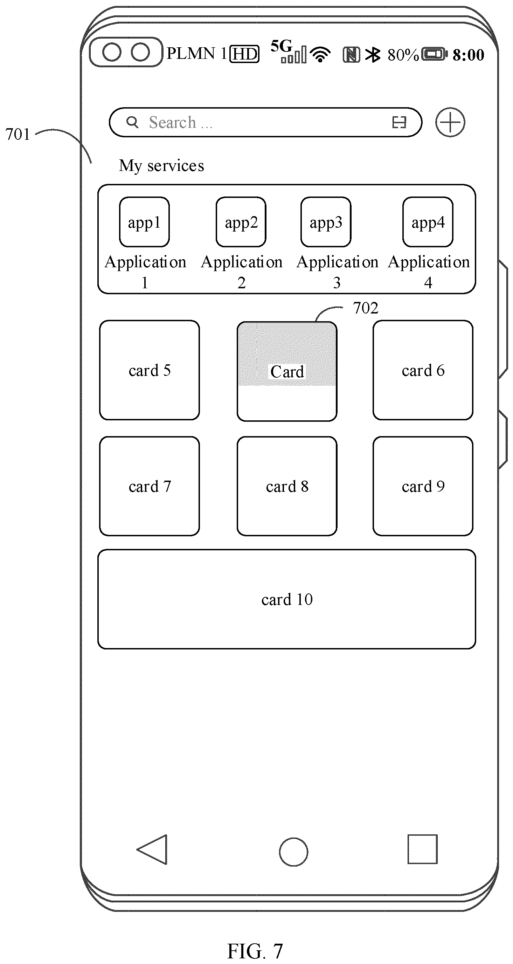

FIG. 7 shows a scenario in which an interface display method according to an embodiment of this application is applied to a leftmost home screen application of an electronic device.

A leftmost home screen application interface 701 may include a card 702, and the card 702 may be a card whose background needs to be blurred. In response to an operation that a user triggers moving of the card 702, the electronic device may enable the card 702 to be in a movable state in the leftmost home screen application interface 701 and to be capable of moving in a direction indicated by the user. For example, the user may touch and hold the card 702 to make the card 702 to be in the movable state, so that the user may move the card 702 in the leftmost home screen application interface 701. The operation that the user triggers moving of the card 702 is not limited in this embodiment of this application.

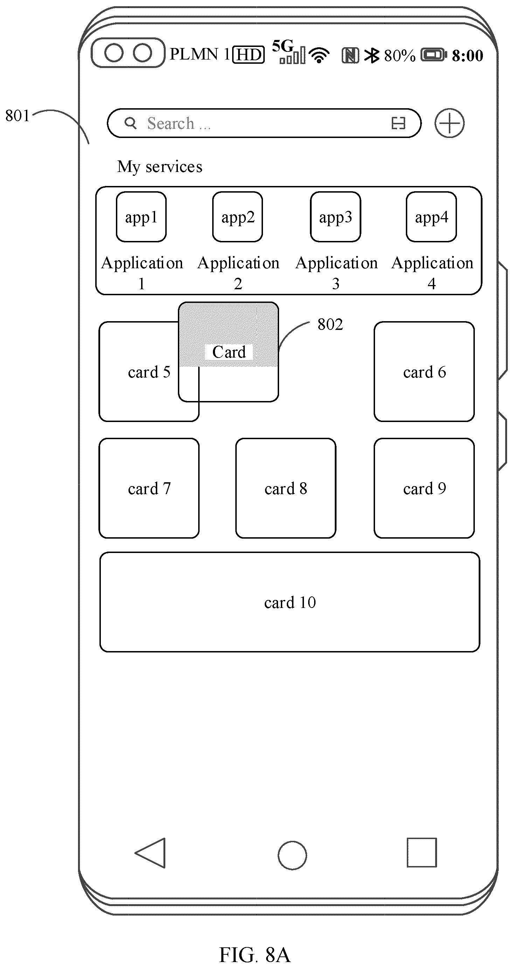

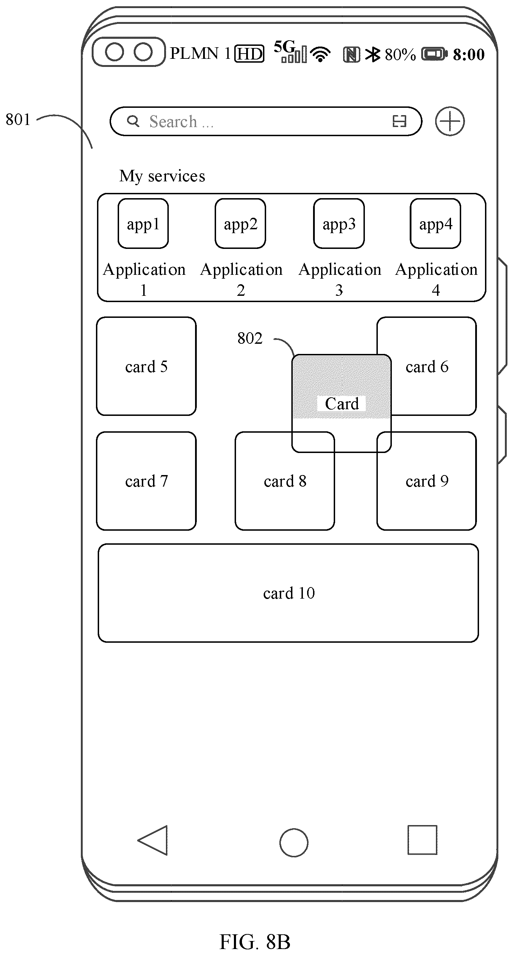

As shown in FIG. 8A and FIG. 8B, in a leftmost home screen application interface 801, the electronic device may move, in response to an operation that the user triggers to move a card 802, the card 802 to a location shown in FIG. 8A. In this case, a part of an interface of a card 5 may be displayed with blur in interface background of the card 802. The electronic device may move, again in response to the operation that the user triggers to move the card 802, the card 802 to a location shown in FIG. 8B. In this case, a part of an interface of a card 6, a part of an interface of a card 8, and a part of an interface of a card 9 may be displayed with blur in the interface background of the card 802.

In other words, when the card 802 is moved in the leftmost home screen application interface 801, the electronic device may use content displayed in the leftmost home screen application interface 801 as background of the card 802, and display a location of the card 802 with blur in the background of the card 802, to implement dynamic background blurring of the card 802.

It may be understood that the interface display method in this embodiment of this application may also be applied to a scenario in which dynamic background blurring needs to be performed on another application interface, for example, an Albums application interface or a lock screen interface. This is not limited in this embodiment of this application.

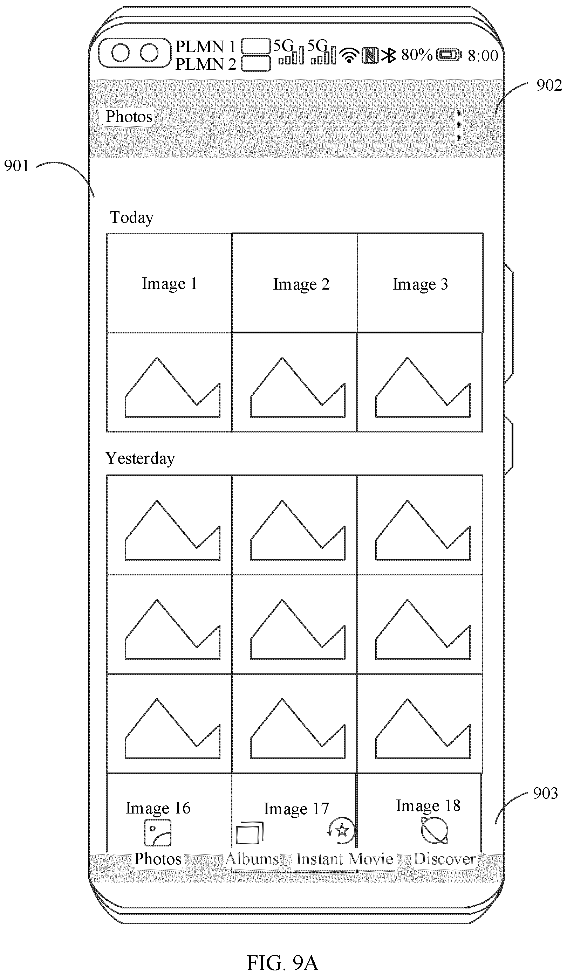

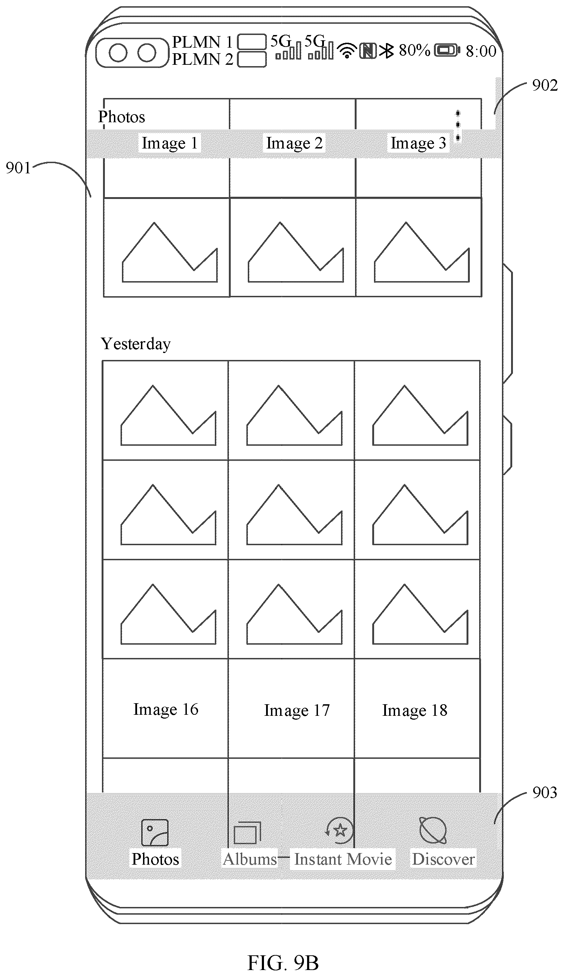

As shown in FIG. 9A and FIG. 9B, an Albums application is used as an example. In an Albums application interface 901 shown in FIG. 9A, an area in which a title bar 902 is located and an area in which a navigation bar 903 is located each may be an area whose background needs to be blurred. For example, an image 16, an image 17, and an image 18 may be displayed with blur in background of the area in which the navigation bar 903 is located. In response to an operation that the user triggers swiping in the Albums application interface 901, the electronic device may make an image in the Albums application interface 901 to be capable of being swiped up or down.

For example, in a case of swiping up, the electronic device may swipe up the image in the Albums application interface 901 in response to the operation that the user triggers swiping in the Albums application interface 901. In this case, as shown in FIG. 9B, an image 1, an image 2, and an image 3 may be displayed with blur in background of the area in which the title bar 902 is located, and an image 19, an image 20, and an image 21 may be displayed with blur in the background of the area in which the navigation bar 903 is located.

In other words, when swiping is performed on the image in the Albums application interface 901, the electronic device may use content in the Albums application interface 901 as background of the title bar 902 and background of the navigation bar 903, display with blur, in the background of the title bar 902, the area in which the title bar 902 is located, and display with blur, in the background of the navigation bar 903, the area in which the navigation bar 903 is located, to implement dynamic background blurring for the title bar 902 and the navigation bar 903.

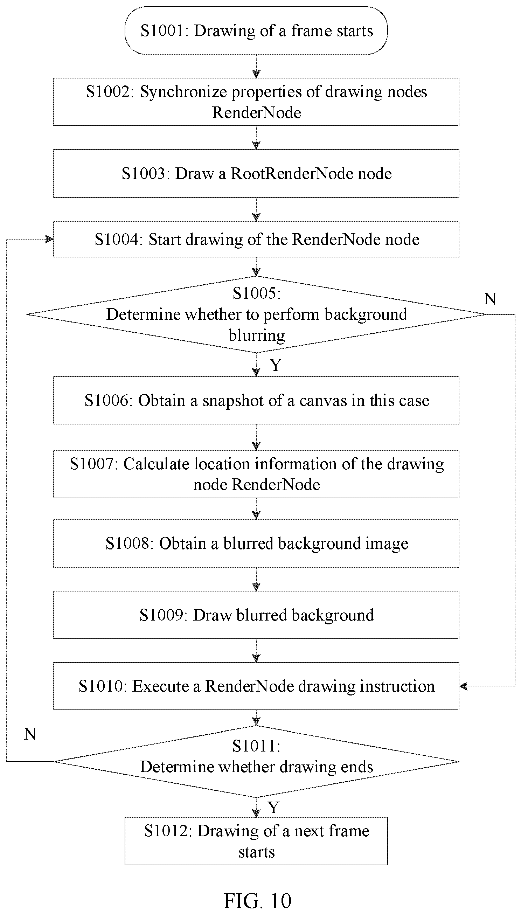

FIG. 10 is a schematic flowchart of implementing background blurring.

S1001: Drawing of a frame starts.

S1002: Synchronize properties of drawing nodes renderNode.

In a process of drawing and rendering each frame, an electronic device first synchronizes properties of all drawing nodes renderNode. A blurring parameter that is set by an application and the blurring filter generated in the foregoing embodiment corresponding to FIG. 6 may be synchronized to the drawing node renderNode. In a possible implementation, the electronic device may implement synchronization of the blurring parameter and the blurring filter in the properties of the drawing nodes renderNode by using a syncProperties() function.

S1003: Draw a RootRenderNode node.

The RootRenderNode node may be understood as a root node of all drawing nodes RenderNode, and drawing of a frame of image may start from the RootRenderNode node.

S1004: Start drawing of the drawing node renderNode.

The electronic device may create a canvas by invoking an interface provided by the drawing node renderNode, and perform drawing on the canvas. In a possible implementation, the electronic device may create the canvas by calling a function start () provided by the drawing node renderNode.

S1005: Determine whether to perform background blurring.

In a process in which the electronic device performs drawing on the canvas, when execution proceeds to each drawing node renderNode, the electronic device may preferentially determine whether the drawing node renderNode needs to perform a background blurring operation. In a possible implementation, the electronic device may determine whether a blurring filter in a property of the drawing node renderNode is none and/or whether a blurring radius is greater than zero.

If the blurring filter in the property of the drawing node renderNode is not none, and/or the blurring radius is greater than zero, it indicates that drawing of background blurring needs to be performed, and in this case, the electronic device may perform step S1006 to take a snapshot of the canvas.

If the blurring filter in the property of the drawing node renderNode is none, or the blurring radius is less than or equal to zero, it indicates that drawing of background blurring does not need to be performed, and in this case, the electronic device may perform step S1010 to perform drawing of a current drawing node renderNode.

S1006: Obtain a snapshot of the canvas in this case.

If the drawing node renderNode needs to perform background blurring, the electronic device may obtain the snapshot of the current canvas. In a drawing process, drawing is performed in a depth-first traversal sequence of a node tree of the drawing nodes renderNode. Therefore, in this case, node drawing for background of the current drawing node renderNode is completed on the canvas.

In a possible implementation, the electronic device may calculate a location of a to-be-blurred area on the canvas based on the property of the drawing node renderNode, and then take the snapshot of the canvas to obtain a partial snapshot of the canvas. A size of the partial snapshot may be a size of a to-be-blurred area that is set by the application, and the partial snapshot may be understood as an unblurred background image. The electronic device takes the partial snapshot of the canvas, so that a relatively small memory is occupied, and therefore, a memory of the electronic device can be saved.

In another possible implementation, the electronic device may alternatively take a snapshot of the entire canvas. A specific manner in which the electronic device obtains the snapshot is not limited in this embodiment of this application.

It may be understood that the foregoing snapshot taking function may be implemented by invoking a snapshot taking capability of a skia graphics library. In this embodiment of this application, a corresponding snapshot drawing instruction may be added to a procedure of implementing background blurring.

S1007: Calculate location information of the drawing node renderNode.

In the foregoing step S1006, if the electronic device takes the snapshot of the entire canvas, the electronic device further needs to calculate a location of a to-be-blurred area in the snapshot based on the property of the drawing node renderNode. The location of the to-be-blurred area in the snapshot may be understood as an unblurred background image.

S1008: Obtain a blurred background image.

The electronic device may mix the blurring filter obtained in the foregoing embodiment corresponding to FIG. 6 with the background image obtained in the foregoing step S1006, to generate the blurred background image. In a possible implementation, a process in which the electronic device mixes the blurring filter with the background image may be implemented by using an OpenGL invoking capability of the skia graphics library.

S1009: Draw blurred background.

In a process of drawing the blurred background, the electronic device may convert a related drawing instruction of a blurring operation into a drawing and rendering instruction that can be called by a GPU driver, and the GPU driver completes drawing of the blurred background image. Because running of a GPU does not affect running time of a main thread of a CPU, if drawing of the blurred background image is completed by the GPU driver, time of rendering an interface can be shortened, and performance of the CPU is not affected.

S1010: Execute a drawing instruction corresponding to the drawing node renderNode.

The electronic device may perform blurring processing on the drawing node renderNode based on the blurring mode in the foregoing blurring parameter.

If the blurring mode is an entire blurring mode, it indicates that the electronic device needs to blur entire background of an area covered by a layout corresponding to the drawing node renderNode. As shown in FIG. 2, the electronic device needs to blur entire background of an area in which three icons in a lower part in a in FIG. 2 are located. The electronic device may draw, by invoking a drawing capability of the skia graphics library, a blurred image at a corresponding location on the canvas as background of the drawing node renderNode, so that content of the drawing node renderNode may be drawn.

If the blurring mode is a fill-in blurring mode, it indicates that the electronic device needs to fill content of the drawing node renderNode with blurred background. It may be understood that the application may select the fill-in blurring mode for text or icons in various shapes to perform background blurring.

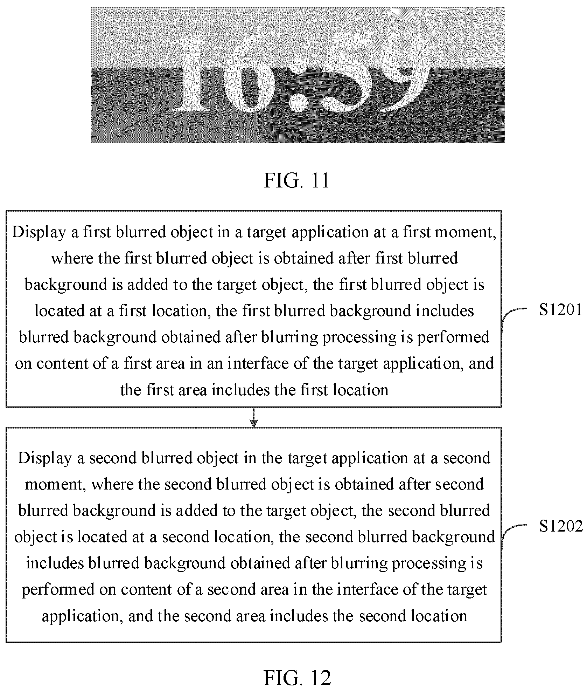

As shown in FIG. 11, the application may select the fill-in blurring mode for text "16:59". When drawing the drawing node renderNode, the electronic device may invoke a drawing capability of the skia graphics library to mix the blurred image used as a shader with a shape area of the drawing node renderNode, to fill the specified shape area with content of the blurred image, thereby blurring background for the text "16:59".

After completing background blurring processing, the electronic device may perform procedures such as rendering and composition of the current frame of image, and may display a final drawing result on a screen of the electronic device.

S1011: Determine whether drawing of the current drawing node renderNode ends.

After completing drawing of the current drawing node renderNode, the electronic device may determine whether drawing of the current frame of image ends. In a possible implementation, the electronic device may determine whether a to-be-drawn drawing node renderNode still exists in the current frame of image. If there is a to-be-drawn drawing node renderNode, it indicates that the drawing of the current frame of image does not end. If there is no to-be-drawn drawing node renderNode, it indicates that the drawing of the current frame of image ends.

If the drawing of the current frame of image does not end, the electronic device may repeatedly perform the foregoing step S1004 - step S1011 until drawing of all drawing nodes renderNode for the current frame of image is completed.

If the drawing of the current frame of image ends, it indicates that the electronic device completes drawing of all drawing nodes renderNode for the current frame of image, and the electronic device may perform step S1012 to draw a next frame of image.

S1012: Drawing of a next frame of image starts.

For a process of drawing the next frame of image, reference may be made to related descriptions in step S1001 - step S1011. Details are not described again.

It may be understood that the foregoing embodiment corresponding to FIG. 10 may be performed in a non-main thread of the electronic device. For example, both a process in which a drawing node renderNode in a Native library performs drawing and rendering and a process of background blurring may be performed in the non-main thread of the electronic device. In this way, running performance of the main thread of the electronic device is not affected, and lagging of an application interface can be reduced.

In this embodiment of this application, different background blurring drawing corresponding to each frame of image may be completed on the canvas, so that a real-time background blurring effect is implemented, a display effect of blurred background in an interface of the electronic device is enriched, and user experience is improved.

It should be noted that, in the foregoing step S1008, after obtaining the blurred background image, the electronic device may buffer the blurred background image. In a subsequent process of drawing each frame of image, if background content of the drawing node renderNode, a specified blurring radius, and a layout of the drawing node renderNode remain unchanged, step S1006 - step S1007 may be not performed, but the blurred background image may be obtained from a cache. In this way, a procedure of taking the snapshot of the canvas and calculating the location information of the drawing node renderNode can be saved, thereby saving computing power and reducing power consumption of the electronic device.

Alternatively, in some application scenarios, for example, in a swiping scenario of an Albums application interface in the foregoing embodiment corresponding to FIG. 9A and FIG. 9B, even if background content of the drawing node renderNode, a specified blurring radius, and a layout of the drawing node renderNode change, the electronic device may perform step S1006 - step S1007 once every M frames to update the blurred background image, where M may be a positive integer greater than or equal to 1. Therefore, power consumption of the electronic device can be reduced while small impact is exerted on display of blurred background.

Alternatively, when the application sets a quantity of interval frames in the blurring parameter, it is assumed that the quantity of interval frames is set to N, and in this case, the electronic device may perform step S1006 - step S1007 once every N frames to update the blurred background image, where N may be a positive integer greater than or equal to 1. It may be understood that if the application does not set the quantity of interval frames, the electronic device may preset a value of the quantity of interval frames. For example, the value of the quantity of interval frames may be set to 1. Specifically, the value of the quantity of interval frames is not limited in this embodiment of this application. Similarly, the electronic device may save the procedure of taking the snapshot of the canvas and calculating the location information of the drawing node renderNode, so that computing power is saved, and power consumption of the electronic device is reduced.

The method in the embodiments of this application is described below in detail by using specific embodiments. The following embodiments may be combined with each other or separately implemented, and same or similar concepts or processes may not be described in some embodiments.

FIG. 12 shows an interface display method according to an embodiment of this application. The method includes the following steps.

S1201: Display a first blurred object in a target application at a first moment, where the first blurred object is obtained after first blurred background is added to the target object, the first blurred object is located at a first location, the first blurred background includes blurred background obtained after blurring processing is performed on content of a first area in an interface of the target application, and the first area includes the first location.

In this embodiment of this application, the first moment may be understood as a moment at which the first blurred object is displayed in the target application.

The target application may be any application in an electronic device. For example, the target application may be the leftmost home screen application in the foregoing embodiment corresponding to FIG. 7, or may be the Albums application in the foregoing embodiment corresponding to FIG. 9A and FIG. 9B. This is not limited in this embodiment of this application.

The target object may be understood as an object that is in the target application and on which blurring processing needs to be performed. For example, the target object may be the card 702 in the foregoing embodiment corresponding to FIG. 7, or may be the area in which the title bar 902 in the foregoing embodiment corresponding to FIG. 9A and FIG. 9B is located or the area in which the navigation bar 903 is located. This is not limited in this embodiment of this application.

The first location may be understood as a location at which the first blurred object is located. For example, the first location may be the location of the card 702 in the foregoing embodiment corresponding to FIG. 7, or may be the location of the title bar 902 in the foregoing embodiment corresponding to FIG. 9A or the location of the navigation bar 903. This is not limited in this embodiment of this application.

The first area may be understood as an area that is in the target application and in which the target object needs to be blurred. For example, the first area may be the blurred area of the card 702 in the foregoing embodiment corresponding to FIG. 7, or may be the blurred area in which the title bar 902 in the foregoing embodiment corresponding to FIG. 9B is located or the blurred area in which the navigation bar 903 is located. This is not limited in this embodiment of this application.

S1202: Display a second blurred object in the target application at a second moment, where the second blurred object is obtained after second blurred background is added to the target object, the second blurred object is located at a second location, the second blurred background includes blurred background obtained after blurring processing is performed on content of a second area in the interface of the target application, the second area includes the second location, the content of the first area in the interface of the target application is different from the content of the second area in the interface of the target application, and the second moment is later than the first moment.

In this embodiment of this application, the second moment may be understood as a moment at which the second blurred object is displayed in the target application.

The second location may be understood as a location at which the second blurred object is located. For example, the second location may be the location of the card 802 in the foregoing embodiment corresponding to FIG. 8A and FIG. 8B, or may be the location of the title bar 902 in the foregoing embodiment corresponding to FIG. 9B or the location of the navigation bar 903. This is not limited in this embodiment of this application.

It may be understood that the second location and the first location may be the same or different. For example, in the application scenario of Albums in the foregoing embodiment corresponding to FIG. 9A and FIG. 9B, a second location of the title bar 902 in FIG. 9B may be the same as a first location of the title bar 902 in FIG. 9A. In the application scenario of Leftmost home screen in the foregoing embodiments corresponding to FIG. 7 and FIG. 8A and FIG. 8B, a second location of the card 802 and a first location of the card 702 may be different. This is not limited in this embodiment of this application.

The second area may be understood as an area that is in the target application and in which the target object needs to be blurred. For example, the second area may be the blurred area of the card 802 in the foregoing embodiment corresponding to FIG. 8A and FIG. 8B, or may be the blurred area in which the title bar 902 in the foregoing embodiment corresponding to FIG. 9B is located or the blurred area in which the navigation bar 903 is located. This is not limited in this embodiment of this application.

According to the interface display method provided in this embodiment of this application, in a same application, the electronic device may enable blurred background in the application to dynamically change as content in an application interface changes, so that a dynamic background blurring effect is presented in the application interface, thereby improving user experience.

Optionally, on a basis of the embodiment corresponding to FIG. 12, before the second blurred object is displayed in the target application, the method may further include: receiving a triggering operation performed by a user on the target object; and moving the target object to the second location in response to the triggering operation.

In this embodiment of this application, the triggering operation may be any operation that triggers moving of the target object. For example, the triggering operation may be a drag start operation, or may be an operation that the user triggers moving of the card 702 in the application scenario of Leftmost home screen in the foregoing embodiment corresponding to FIG. 7. A specific triggering operation is not limited in this embodiment of this application.

It may be understood that, in the application scenario of Leftmost home screen, as the target object moves, blurred background corresponding to the target object may also dynamically change, so that aesthetic appeal of the application interface can be increased, and user experience can be improved.

Optionally, on a basis of the embodiment corresponding to FIG. 12, in the interface of the target application, a location of the target object remains unchanged, and before the second blurred object is displayed in the target application, the method may further include: receiving a triggering operation performed by a user on an area other than the second area in the interface of the target application; and making, in response to the triggering operation, content in the interface of the target application change.

In this embodiment of this application, the triggering operation may be any operation of triggering the area other than the second area in the interface of the target application to move. For example, the triggering operation may be the operation that the user triggers swiping on the image in the Albums application interface 901 in the application scenario of Albums in the foregoing embodiment corresponding to FIG. 9A and FIG. 9B. A specific triggering operation is not limited in this embodiment of this application.

It may be understood that, in the application scenario of Albums, when content in the application interface changes, blurred background corresponding to the target object may also dynamically change, so that display of the application interface is relatively rich, and user experience is improved.

Optionally, on a basis of the embodiment corresponding to FIG. 12, a blurring parameter is set by the target application, and the blurring parameter includes one or more of the following parameters: a blurring radius, a color value, saturation, a quantity of interval frames, a blurring algorithm, and a blurring mode. When the blurring parameter includes the blurring radius, a smaller blurring radius leads to a lighter blurring degree of the first area, and a larger blurring radius leads to a heavier blurring degree of the first area. The quantity of interval frames is used to indicate a cycle for calculating blurred background. The blurring mode includes a first mode and a second mode, and if the blurring mode is the first mode, the first blurred object is obtained after the first blurred background is drawn in the first area, or if the blurring mode is the second mode, the first blurred object is obtained after fill-in processing is performed on the target object by using the first blurred background.

In this embodiment of this application, for the color value, reference may be made to related descriptions of the color value in the foregoing embodiment corresponding to FIG. 5. Details are not described again. For the saturation, reference may be made to related descriptions of the saturation in the foregoing embodiment corresponding to FIG. 5. Details are not described again. For the blurring algorithm, reference may be made to related descriptions of the blurring algorithm in the foregoing embodiment corresponding to FIG. 5. Details are not described again.

The first mode may include an entire blurring mode. For details of the first mode, reference may be made to related descriptions of step S1010 in the foregoing embodiment corresponding to FIG. 10. Details are not described again. The second mode may include a fill-in blurring mode. For details of the second mode, reference may be made to related descriptions of step S 1010 in the foregoing embodiment corresponding to FIG. 10. Details are not described again.

The electronic device may determine a blurring degree of the target object, brightness of the application interface, brightness of color, and the like based on the blurring parameter that is set by the target application, and may further obtain a blurred obj ect in different blurring manners. In this way, there may be different display effects in the application interface, so that display of the blurred object in the application interface is enriched, thereby improving user experience.

Optionally, on a basis of the embodiment corresponding to FIG. 12, before the displaying a first blurred object in a target application, the method may further include: The target application transfers, in a first thread, the blurring parameter to a view control at an application layer; the view control transfers, in the first thread, the blurring parameter to a drawing node in a Native library, where the blurring parameter is in a to-be-synchronized state; and if the blurring radius in the blurring parameter is greater than zero, a skia graphics library in the Native library generates, in the first thread, a blurring filter based on the blurring radius, or otherwise, determines that the blurring filter is none.

In this embodiment of this application, the first thread may be understood as a main thread. It may be understood that, in the first thread, the electronic device may perform the process in which the application transfers a parameter to the Native library of the electronic device in the foregoing embodiment corresponding to FIG. 6.

The blurring filter may be the blurring filter in the foregoing embodiment corresponding to FIG. 6. Details are not described again.

It may be understood that an application parameter is transferred in the main thread, so that another thread does not need to be re-started, thereby reducing overheads of starting a thread, and improving running efficiency of the electronic device.

Optionally, on a basis of the embodiment corresponding to FIG. 12, before the displaying a first blurred object in a target application, the method may further include: synchronizing the blurring parameter and the blurring filter in a property of the drawing node based on a second thread; if the blurring filter is not none, obtaining, in the second thread, a snapshot of a canvas of the target application; determining an unblurred background image in the second thread, where the unblurred background image is content that is in the snapshot of the canvas and that is located in the first area; and mixing, by the skia graphics library and in the second thread, the unblurred background image and the blurring filter, to obtain the first blurred background.

In this embodiment of this application, the second thread may be understood as a non-main thread, a sub-thread, or the like. In the second thread, for a process performed by the electronic device, reference may be made to steps in the foregoing embodiment corresponding to FIG. 10. For example, the electronic device may perform a process in which a drawing node renderNode in the Native library performs drawing and rendering and background blurring, to implement a real-time background blurring effect.

It may be understood that a snapshot of a canvas may include all captured content of the canvas, or may include a part of captured content of the canvas. For a specific snapshot of the canvas, reference may be made to related descriptions of step S1006 in the foregoing embodiment corresponding to FIG. 10. Details are not described again. The unblurred background image may be understood as the unblurred background image in the foregoing embodiment corresponding to FIG. 10. Details are not described again.

In this embodiment of this application, blurred background in the application can dynamically change as the content in the application interface changes, so that a display effect of background blurring in the interface of the electronic device is enriched, thereby improving user experience.

Optionally, on a basis of the embodiment corresponding to FIG. 12, the synchronizing the blurring parameter and the blurring filter in a property of the drawing node based on a second thread may include: The skia graphics library calls, in the second thread, a syncProperties() function to synchronize the blurring parameter and the blurring filter in the property of the drawing node.

In this embodiment of this application, the skia graphics library may synchronize the blurring parameter and the blurring filter in the to-be-synchronized state to the property of the drawing node by calling the syncProperties() function, to prepare for further background blurring.

Optionally, on a basis of the embodiment corresponding to FIG. 12, the obtaining a snapshot of a canvas of the target application in the second thread may include: The skia graphics library obtains, in the second thread, the snapshot of the canvas of the target application based on the property of the drawing node.

In this embodiment of this application, for a process of obtaining the snapshot of the canvas based on the property of the drawing node, reference may be made to related descriptions of step S1006 and step S1007 in the embodiment corresponding to FIG. 10. Details are not described again. The snapshot of the canvas is dynamically obtained, so that the blurred background dynamically changes as the content in the application interface changes.

Optionally, on a basis of the embodiment corresponding to FIG. 12, after the first blurred background is obtained, the method may include: buffering the first blurred background; and displaying a third blurred object in the target application at a third moment, where the third blurred object is obtained after the first blurred background in a cache is added to the target object, and the third moment is later than the first moment.

In this embodiment of this application, the third moment may be a moment at which the third blurred object is displayed in the target application.

It may be understood that, between the first moment and the third moment, interface content of the target application may change, or may remain unchanged. Between the first moment and the third moment, the electronic device may obtain the first blurred background from the cache, to display the third blurred object. For a specific process of obtaining the blurred background from the cache, reference may be made to related descriptions in the foregoing embodiment corresponding to FIG. 10. Details are not described again.

In this way, the electronic device can save a procedure of taking the snapshot of the canvas, and can also save a procedure of calculating location information of the drawing node, thereby saving computing power and reducing power consumption of the electronic device.

Optionally, on a basis of the embodiment corresponding to FIG. 12, the first blurred background, the blurring parameter, and a layout of the drawing node each remain unchanged between the first moment and the third moment.

In this embodiment of this application, that the first blurred background, the blurring parameter, and the layout of the drawing node each remain unchanged may be understood as that the interface content of the target application remains unchanged. In this way, the electronic device may not need to take a snapshot of each frame of canvas, so that an execution procedure of blurring processing can be saved, thereby saving computing power.

Optionally, on a basis of the embodiment corresponding to FIG. 12, the quantity N of interval frames is a positive integer greater than or equal to 1, and after the first blurred background is obtained, the method may include: buffering the first blurred background; and displaying a fourth blurred object in the target application at a fourth moment, where an interval between the fourth blurred object and the first blurred object is less than or equal to N frames, the fourth blurred object is obtained after the first blurred background in a cache is added to the target object, and the fourth moment is later than the first moment.

In this embodiment of this application, the fourth moment may be a moment at which the fourth blurred object is displayed in the target application.

It may be understood that, between the first moment and the fourth moment, the electronic device may obtain the first blurred background from the cache based on the quantity N of interval frames, to display the fourth blurred object. For a specific process of obtaining the blurred background from the cache based on the quantity N of interval frames, reference may be made to related descriptions in the foregoing embodiment corresponding to FIG. 10. Details are not described again.

In this way, the electronic device can save a procedure of taking the snapshot of the canvas and calculating the location information of the drawing node, thereby saving computing power and reducing power consumption of the electronic device.

Optionally, on a basis of the embodiment corresponding to FIG. 12, the second thread runs in a graphics processing unit GPU.

In this embodiment of this application, the electronic device may convert a related drawing instruction of a blurring operation into a drawing and rendering instruction that can be called by the GPU, and the GPU completes drawing of a blurred background image. Because running of the GPU does not affect running time of a main thread of a CPU, if drawing of the blurred background image is completed by the GPU, time of drawing an interface can be shortened, and performance of the CPU is not affected.

It should be noted that user information (including but not limited to user equipment information, personal information of a user, and the like) and data (including but not limited to data used for analysis, stored data, presented data, and the like) involved in this application are all information and data that are authorized by the user or that are fully authorized by each party. In addition, collection, use, and processing of the related data need to comply with relevant laws, regulations, and standards, and a corresponding operation entry is provided for the user to choose to authorize or reject.

The solutions provided in the embodiments of this application are mainly described above from a method perspective. To implement the foregoing functions, corresponding hardware structures and/or software modules for performing the functions are included. A person skilled in the art should be easily aware that the method steps in the examples described with reference to the embodiments disclosed in this specification can be implemented in this application in a form of hardware or a combination of hardware and computer software. Whether a specific function is performed by hardware or hardware driven by computer software depends on a particular application and a design constraint of the technical solutions. A person skilled in the art may use different methods to implement the described functions for each specific application, but it should not be considered that such an implementation goes beyond the scope of this application.

In the embodiments of this application, an apparatus for implementing the method may be divided into functional modules based on the foregoing method examples, for example, each functional module may be obtained through division for each corresponding function, or two or more functions may be integrated into one processing module. The integrated module may be implemented in a form of hardware, or may be implemented in a form of a software functional module. It should be noted that division into modules in the embodiments of this application is an example, and is merely logical function division. During actual implementation, there may be another division manner.

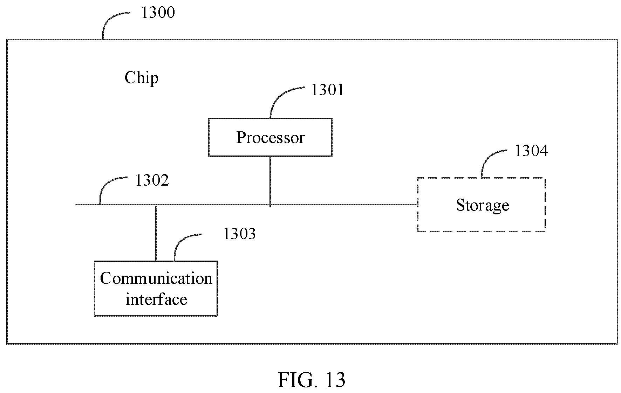

FIG. 13 is a schematic diagram of a structure of a chip according to an embodiment of this application. A chip 1300 includes one or at least two (including two) processors 1301, a communication line 1302, a communication interface 1303, and a storage 1304.

In some implementations, the storage 1304 stores the following elements: an executable module or a data structure, or a subset thereof, or an extended set thereof.

The method described in the embodiments of this application may be applied to the processor 1301 or implemented by the processor 1301. The processor 1301 may be an integrated circuit chip having a capability of processing a signal. During implementation, the steps of the foregoing method may be performed by using an integrated logic circuit of hardware in the processor 1301 or by using instructions in a form of software. The processor 1301 may be a general-purpose processor (for example, a microprocessor or a conventional processor), a digital signal processor (digital signal processing, DSP), an application specific integrated circuit (application specific integrated circuit, ASIC), a field-programmable gate array (field-programmable gate array, FPGA) or another programmable logic device, a discrete gate, a transistor logic device, or a discrete hardware component. The processor 1301 may implement or perform the processing-related methods, steps, and logical block diagrams disclosed in the embodiments of this application.

The steps of the method disclosed with reference to the embodiments of this application may be directly performed by a hardware decoding processor, or performed by a combination of hardware and a software module in a decoding processor. The software module may be located in a mature storage medium in the art, such as a random access memory, a read-only memory, a programmable read-only memory, or an electrically erasable programmable read-only memory (electrically erasable programmable read only memory, EEPROM). The storage medium is located in the storage 1304, and the processor 1301 reads information in the storage 1304 and completes the steps of the foregoing method in combination with hardware in the processor.

The processor 1301, the storage 1304, and the communication interface 1303 may communicate with each other through the communication line 1302.

In the foregoing embodiments, instructions stored in the storage for execution by the processor may be implemented in a form of a computer program product. The computer program product may be written into the storage in advance, or may be downloaded and installed in the storage in a form of software.

An embodiment of this application further provides a computer program product, including one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) manner or a wireless (for example, infrared, radio, or microwave) manner. The computer-readable storage medium may be any available medium that can be stored by the computer, or a data storage device such as a server or a data center integrating one or more available media. For example, the available medium may include a magnetic medium (for example, a floppy disk, a hard disk, or a magnetic tape), an optical medium (for example, a digital versatile disc (digital versatile disc, DVD)), or a semiconductor medium (for example, a solid state disk (solid state disk, SSD)).

An embodiment of this application further provides a computer-readable storage medium. All or some of the methods described in the foregoing embodiments may be implemented by using software, hardware, firmware, or any combination thereof. The computer-readable medium may include a computer storage medium and a communication medium, and may further include any medium that enables a computer program to be transmitted from one place to another place. The storage medium may be any target medium accessible to the computer.

In a possible design, the computer-readable medium may include a compact disc read-only memory (compact disc read-only memory, CD-ROM), a RAM, a ROM, an EEPROM, or another optical disc storage; and the computer-readable medium may include a magnetic disk memory or another magnetic disk storage device. In addition, any connecting line may also be appropriately referred to as a computer-readable medium. For example, if software is transmitted from a website, a server, or another remote source by using a coaxial cable, an optical fiber cable, a twisted pair, a DSL, or a wireless technology (for example, infrared, radio, and microwave), the coaxial cable, the optical fiber cable, the twisted pair, the DSL, or the wireless technology such as infrared, radio, and microwave are included in the definition of the medium. As used herein, a magnetic disk and an optical disc include a compact disc (CD), a laser disc, an optical disc, a digital versatile disc (digital versatile disc, DVD), a floppy disk, and a Blu-ray disc, and the magnetic disk usually reproduces data magnetically, while the optical disc reproduces data optically by using a laser.

The embodiments of this application are described with reference to the flowcharts and/or block diagrams of the method, the device (system), and the computer program product according to the embodiments of this application. It should be understood that computer program instructions may be used to implement each procedure and/or each block in the flowcharts and/or the block diagrams and a combination of procedures and/or blocks in the flowcharts and/or the block diagrams. These computer program instructions may be provided to a general-purpose computer, a dedicated computer, an embedded processor, or a processing unit of another programmable data processing device to generate a machine, so that the instructions executed by the computer or the processing unit of the another programmable data processing device generate an apparatus for implementing a specific function in one or more procedures in the flowcharts and/or in one or more blocks in the block diagrams.

## Claims

1. An interface display method, wherein the method comprises:
displaying a first blurred object in a target application at a first moment, wherein the first blurred object is obtained after first blurred background is added to the target object, the first blurred object is located at a first location, the first blurred background comprises blurred background obtained after blurring processing is performed on content of a first area in an interface of the target application, and the first area comprises the first location; and
displaying a second blurred object in the target application at a second moment, wherein the second blurred object is obtained after second blurred background is added to the target object, the second blurred object is located at a second location, the second blurred background comprises blurred background obtained after blurring processing is performed on content of a second area in the interface of the target application, the second area comprises the second location, the content of the first area in the interface of the target application is different from the content of the second area in the interface of the target application, and the second moment is later than the first moment.

2. The method according to claim 1, wherein before the displaying a second blurred object in the target application, the method further comprises:
receiving a triggering operation performed by a user on the target object; and
moving the target object to the second location in response to the triggering operation.

3. The method according to claim 1, wherein in the interface of the target application, a location of the target object remains unchanged, and before the displaying a second blurred object in the target application, the method further comprises:
receiving a triggering operation performed by the user on an area other than the second area in the interface of the target application; and
making, in response to the triggering operation, content in the interface of the target application change.

4. The method according to any one of claims 1-3, wherein a blurring parameter is set by the target application, and the blurring parameter comprises one or more of the following parameters: a blurring radius, a color value, saturation, a quantity of interval frames, a blurring algorithm, and a blurring mode;
when the blurring parameter comprises the blurring radius, a smaller blurring radius leads to a lighter blurring degree of the first area, and a larger blurring radius leads to a heavier blurring degree of the first area;
the quantity of interval frames is used to indicate a cycle for calculating blurred background; and
the blurring mode comprises a first mode and a second mode, and if the blurring mode is the first mode, the first blurred object is obtained after the first blurred background is drawn in the first area, or if the blurring mode is the second mode, the first blurred object is obtained after fill-in processing is performed on the target object by using the first blurred background.

5. The method according to claim 4, wherein before the displaying a first blurred object in a target application, the method further comprises:
transferring, by the target application and in a first thread, the blurring parameter to a view control at an application layer;
transferring, by the view control and in the first thread, the blurring parameter to a drawing node in a Native library, wherein the blurring parameter is in a to-be-synchronized state; and
if the blurring radius in the blurring parameter is greater than zero, generating, by a skia graphics library in the Native library and in the first thread, a blurring filter based on the blurring radius, or otherwise, determining that the blurring filter is none.

6. The method according to claim 5, wherein before the displaying a first blurred object in a target application, the method further comprises:
synchronizing the blurring parameter and the blurring filter in a property of the drawing node based on a second thread;
if the blurring filter is not none, obtaining a snapshot of a canvas of the target application in the second thread;
determining an unblurred background image in the second thread, wherein the unblurred background image is content that is in the snapshot of the canvas and that is located in the first area; and
mixing, by the skia graphics library and in the second thread, the unblurred background image and the blurring filter, to obtain the first blurred background.

7. The method according to claim 6, wherein the synchronizing the blurring parameter and the blurring filter in a property of the drawing node based on a second thread comprises:
calling, by the skia graphics library and in the second thread, a syncProperties() function to synchronize the blurring parameter and the blurring filter in the property of the drawing node.

8. The method according to either of claims 6-7, wherein the obtaining a snapshot of a canvas of the target application from the second thread comprises:
obtaining, by the skia graphics library and in the second thread, the snapshot of the canvas of the target application based on the property of the drawing node.

9. The method according to any one of claims 1-8, wherein after the first blurred background is obtained, the method comprises:
buffering the first blurred background; and
displaying a third blurred object in the target application at a third moment, wherein the third blurred object is obtained after the first blurred background in a cache is added to the target object, and the third moment is later than the first moment.

10. The method according to claim 9, wherein the first blurred background, the blurring parameter, and a layout of the render node each remain unchanged from the first moment to the third moment.

11. The method according to any one of claims 4-8, wherein the quantity N of interval frames is a positive integer greater than or equal to 1, and after the first blurred background is obtained, the method comprises:
buffering the first blurred background; and
displaying a fourth blurred object in the target application at a fourth moment, wherein an interval between the fourth blurred object and the first blurred object is less than or equal to N frames, the fourth blurred object is obtained after the first blurred background in a cache is added to the target object, and the fourth moment is later than the first moment.

12. The method according to any one of claims 6-11, wherein the second thread runs in a graphics processing unit GPU.

13. An electronic device, comprising a storage and a processor, wherein the storage is configured to store a computer program, and the processor is configured to execute the computer program, to perform the method according to any one of claims 1-12.

14. A computer-readable storage medium, wherein the computer-readable storage medium stores instructions, and when the instructions are executed, a computer is enabled to perform the method according to any one of claims 1-12.

15. A computer program product, comprising a computer program, wherein when the computer program is run, an electronic device is enabled to perform the method according to any one of claims 1-12.
